Europäisches Patentamt

**European Patent Office**

Office européen des brevets

(11) Publication number : **0 302 920 B1**

(12) **EUROPEAN PATENT SPECIFICATION**

(45) Date of publication of patent specification :
**23.09.92 Bulletin 92/39**

(21) Application number : **88901728.1**

(22) Date of filing : **05.02.88**

(86) International application number :
**PCT/US88/00339**

(87) International publication number :
**WO 88/05725 11.08.88 Gazette 88/18**

(51) Int. Cl.⁵ : **B41F 17/00, B41F 17/36,
B65G 47/14**

(54) **INK-JET MARKER FOR PELLET-SHAPED ARTICLES.**

(30) Priority : **06.02.87 US 11790**

(43) Date of publication of application :
**15.02.89 Bulletin 89/07**

(45) Publication of the grant of the patent :
**23.09.92 Bulletin 92/39**

(84) Designated Contracting States :
**AT BE CH DE FR GB IT LI LU NL SE**

(56) References cited :
**DE-A- 3 239 955
DE-C- 1 163 239
US-A- 2 859 689
US-A- 2 931 292
US-A- 2 961 087
US-A- 3 084 781
US-A- 3 272 118
US-A- 3 789 575
US-A- 3 910 183
US-A- 3 933 239
US-A- 4 019 187**

(56) References cited :
**US-A- 4 029 006
US-A- 4 077 317
US-A- 4 126 219
US-A- 4 189 996
US-A- 4 308 942
US-A- 4 369 702
US-A- 4 377 971
US-A- 4 378 564
US-A- 4 413 556
US-A- 4 548 825
US-A- 4 632 028**

(73) Proprietor : **ACKLEY MACHINE CORP.
1273 North Church Street
Moorestown, NJ 08057 (US)**

(72) Inventor : **ACKLEY, E., Michael
1273 North Church Street
Moorestown, NJ 08057 (US)**

(74) Representative : **Bassett, Richard Simon et al
ERIC POTTER & CLARKSON St. Mary's Court
St. Mary's Gate
Nottingham NG1 1LE (GB)**

EP 0 302 920 B1

## Description

### Background of the Invention

The present invention relates generally to pellet marking devices, and in particular, to a pellet marking device which makes use of an ink-jet system.

A variety of devices have been developed for applying desired indicia to pellet-shaped articles, including both regularly and irregularly shaped pellets. For example, U.S. Patents No. 4,632,028; 4,500,0l2; 4,4l3,556; 4,394,933; 4,377,97l; and 4,369,702 address various devices which may be used in applying indicia to articles such as candies, pharmaceutical capsules, tablets and the like, or any other pellet-shaped article to which identifying indicia are to be applied.

In terms of the means which are used to actually apply the indicia to these various articles, each of these devices, and the devices of the prior art, have conventionally made use of a contact-type printing system. To this end, a pair of rollers are provided including a design roll which forms the indicia to be applied to the articles, and which is disposed within an appropriate supply of ink, and a printing roll which is in contact with both the design roll and the articles which are to receive the indicia, for transferring the ink-laden indicia from the design roll to the articles in question. An exemplary description of such a device may be found in U.S. Patent No. 4,528,904.

Each of the above-described pellet marking devices is therefore based upon a printing technique which requires direct contact between the printing assembly and the articles which are to receive the indicia. often, contact between the printing device and the articles is beneficial in assuring that proper markings are transferred to the articles, and that the articles are maintained in proper position during this procedure. For example, direct contact between the printing device and the articles is often important in assuring that a sharp image is transferred to the product. In many cases, direct contact between the printing device and the articles is essential to such a transfer. This would particularly apply to the spin-printing of capsules, caplets and the like, since contact between the printing device and the articles which are to receive the indicia must be sufficient to cause the articles to spin within an appropriate carrier so that the desired indicia are properly applied about the circumference of the articles.

However, in some cases, the articles which are to receive the indicia have been found to be so fragile that a certain potential for breakage of the articles may arise in the course of the printing procedure. This problem most clearly manifests itself in the application of indicia to candies and the like, although similar problems may also be encountered in connection with certain pharmaceutical formulations, depending upon their consistencies. The contact pressure which is applied against such articles may be adjusted (reduced) in an effort to overcome this problem. However, this too presents a problem in that the resiliency of the printing roll tends to vary in use, causing changes over time. Moreover, this reduction in potential for breakage is achieved at the expense of less reliable printing, since contact between the printing device and the articles is reduced.

Such difficulties can result either in the incomplete application of indicia (partially or entirely) to the articles, at one extreme, or damage to the articles, at the other. These problems are further complicated when irregularly shaped pellets are to be marked, since the surface characteristics of such articles cannot be predicted, making the necessary penetration of the contacting printing device even more difficult to establish.

It therefore became desirable to develop an alternative to contact-type printing devices to enable the application of indicia to pellets which are unable to satisfactorily withstand the constraints of actual contact with the printing device.

### Summary of the Invention

It is therefore a primary object of the present invention to provide a device for applying indicia to pellet-shaped articles which does not require contact with the articles to be imprinted.

It is also an object of the present invention to provide a non-contacting pellet marking device which minimizes, or effectively eliminates the potential for breakage of the product in the course of the printing operation.

It is also an object of the present invention to provide a non-contacting pellet marking device which is capable of applying indicia to both regularly shaped and irregularly shaped pellets.

It is also an object of the present invention to provide a non-contacting pellet marking device which is capable of assuring that the desired indicia are completely and reliably applied to each of the pellet-shaped articles being processed.

It is also an object of the present invention to provide a non-contacting pellet marking device having the foregoing capabilities, yet which is simple in construction, maintenance and operation.

These and other objects are achieved in accordance with the present invention by providing a pellet marking device which does not rely upon contact between the marking device and the pellets to be marked in the course of its operation. This is accomplished by combining a suitable carrier system for the pellet-shaped articles to be imprinted with an ink-jet system for applying the indicia to the articles as the articles pass beneath the ink-jet printing head.

Previously, it would have been expected that the use of an ink-jet system to apply indicia to pellet-shaped articles would not produce a satisfactory result in view of various limitations inherent in the ink-jet system. For example, the lack of contact between the printing device and the pellets to receive the indicia makes reliable positioning of the articles extremely difficult. This would lead to the expectation that the indicia would not be reliably applied to each of the articles due to irregularities in their positioning. For similar reasons, an unacceptable decrease in the clarity of the transferred image would be expected.

Aggravation of these problems would be expected when operating upon irregularly shaped pellets, such as candies or the like, or when using the types of dyes which are approved for use in connection with such applications. The approved dyes present a particularly difficult problem in conjunction with ink-jet printing systems in that they generally contain pigments and other diluents (or carrier) which must be approved for human consumption, but which tend to clog the very fine nozzles of the ink-jet printing system; more so than would ordinary dyes (which allow a greater leeway to alter the dye composition to facilitate spraying).

US-A-4548825 discloses an ink-jet printing apparatus for handling and printing tablets.

US-A-4413556 discloses a capsule conveying arrangement which orientates the capsules and places them in pockets of a horizontal conveyor for direct contact printing. The conveying arrangement comprises a pair of rotatable drums, with external pockets, which feed the capsules to the horizontal conveyor.

US-A-4189996 also discloses a capsule conveying apparatus in which the capsules are oriented and placed in pockets of a conveyor for direct contact printing. Printing is carried out through a guide adjacent a side face of the conveyor.

The features of the present invention are as set out in Claim 1.

For further detail regarding a pellet-shaped article marking apparatus in accordance with the present invention, reference is made to the detailed description which follows, taken in conjunction with the following illustrations.

Brief Description of the Drawings

Figure I is an isometric view of a pellet marking apparatus, which is not in accordance with the present invention.

Figure 2 is a side elevational view of the apparatus of Figure I.

Figure 3 is a top plan view of the apparatus of Figure I.

Figure 4 is an end elevational view of the apparatus of Figure I.

Figure 5 is a top plan view of a carrier bar used in the apparatus of Figure I.

Figure 6 is a side elevational view of the carrier bar of Figure 5.

Figure 7 is a top plan view of a pocket of the carrier bar of Figures 5 and 6.

Figure 8 is a sectional view of the pocket of Figure 7, taken along line 8-8.

Figure 9 is a partial, side elevational view of a knock-out mechanism for use in connection with the carrier bars of Figures 5 and 6.

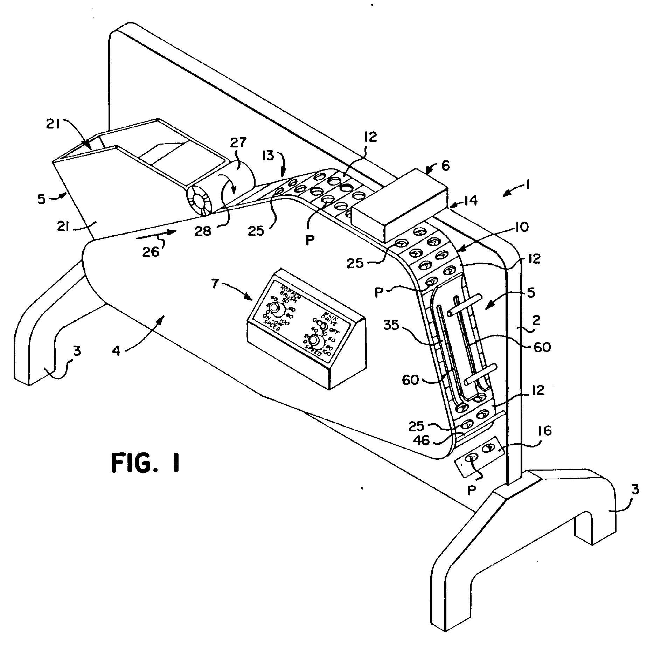

Figure I0 is a top plan view of a guide for use in connection with the apparatus of Figure 1, when modified according to the present invention.

Figure II is a partial, side elevational view of an adjustment mechanism for the guide of Figure I0.

Figure I2 is a sectional view of the guide of Figure I0, taken along line I2-I2.

Figure I3 is a sectional view of the guide of Figure I0, taken along line I3-I3.

Figures I4 to I6 are schematic representations of alternative embodiment conveying paths in accordance with the present invention.

In the several views provided, like reference numerals denote similar structure.

Detailed Description of the Preferred Embodiment

Figure I illustrates a pellet marking apparatus I for marking any of a variety of pellet-shaped articles with appropriate indicia. The pellet-shaped articles may be regularly shaped, such as capsules, caplets, pills, tablets and other spherical, oval or cylindrical shapes, as well as irregularly shaped articles. The indicia to be applied to these articles may be varied according to need, depending upon the markings which are to be applied to the articles, but will generally be of a food-grade, or even a pharmaceutical grade, in view of the anticipated uses for such indicia. For purposes of illustration, pellets (P), both marked and unmarked, are shown in Figure I only.

The pellet marking apparatus I is supported upon a frame 2 having spaced legs 3 for providing a free standing support. Extending from the frame 2 is a conveyor mechanism 4 for conveying pellets through the apparatus I as will be discussed more fully below, a feed hopper 5 for receiving a supply of pellets and for delivering the pellets to the conveyor mechanism 4 in organized fashion, and a printing head 6 positioned at an appropriate location along the conveyor mechanism 4. Operation of the resulting assembly is advantageously regulated from a centrally located control panel 7.

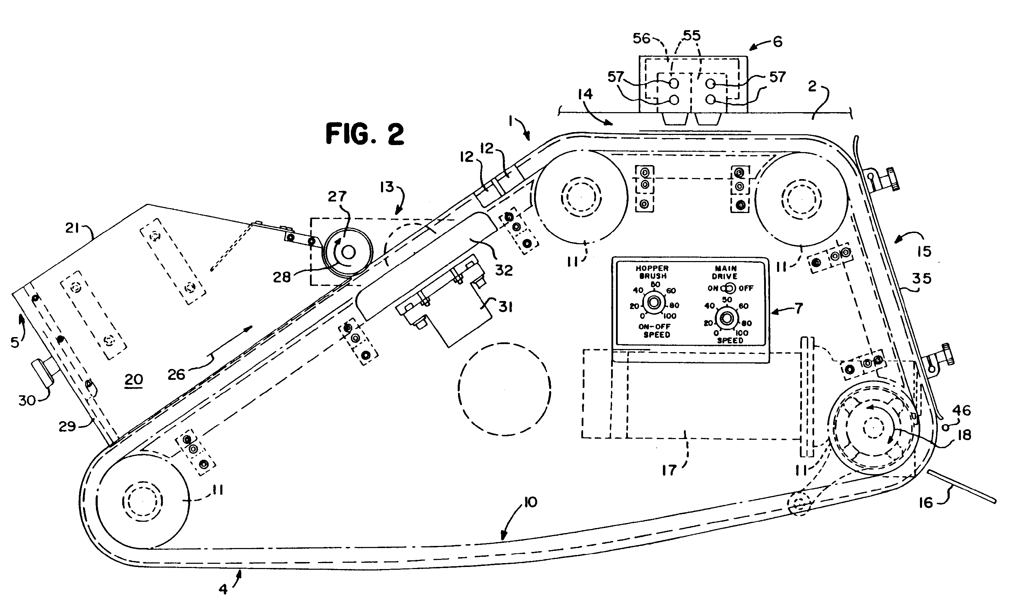

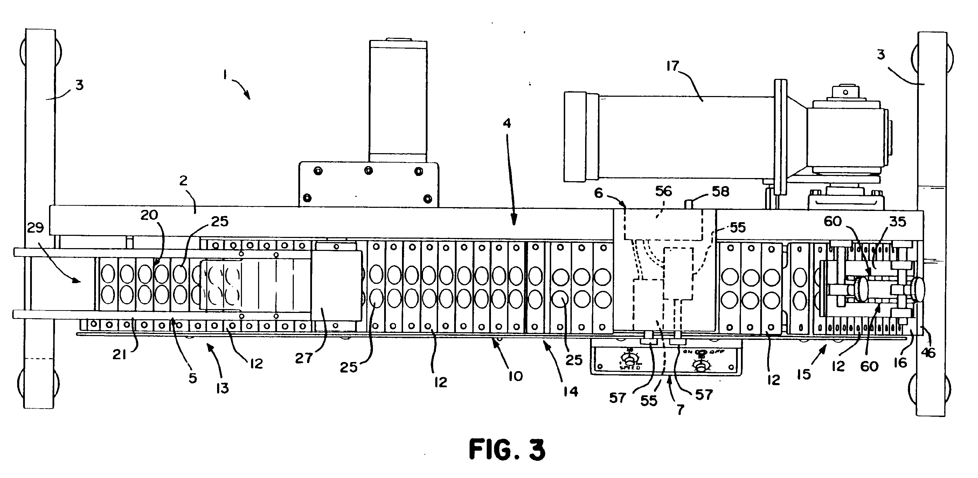

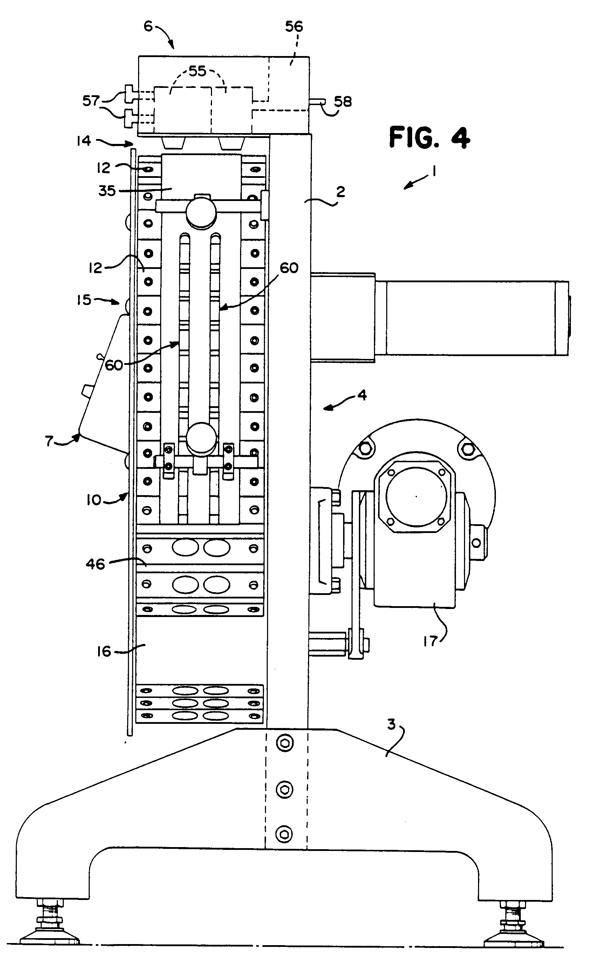

Referring to Figures 2-4, the conveyor mechanism 4 takes the form of a continuous chain conveyor I0 disposed upon appropriately positioned sprockets II. The chain conveyor I0 operates to receive a series of carrier bars I2 for collecting pellets from the feed hopper 5 and for conveying the collected pellets through the pellet marking apparatus l. In the illustrative embodiment of Figures 2-4, the chain conveyor l0 forms a conveyor path which initially progresses along an inclined portion l3, extending from the feed hopper 5, and which then passes to a generally horizontal portion l4. Thereafter, the chain conveyor l0 passes through a declining portion l5, eventually reaching the discharge at l6. Return of the chain conveyor l0 from the declining portion l5 to the inclined portion l3 is unsupported, allowing a degree of slack in the chain conveyor l0 to accommodate irregularities in the system. An appropriate motor/gear-reduction unit l7 is provided to operate the chain conveyor l0, in the direction of the arrow l8.

The feed hopper 5 is adapted to receive a quantity of pellets for controlled delivery to the chain conveyor l0. Pellets are introduced to the feed hopper 5, filling the cavity 20 which is defined by the enclosure 2l of the feed hopper 5, and resting upon the carrier bars l2 of the chain conveyor l0. For this reason, and to maximize the number of pellets which may be processed through the pellet marking apparatus l, the carrier bars l2 are advantageously attached to the chain conveyor l0 in relatively close, juxtaposed relationship to one another, forming a substantially continuous conveyor surface.

The carrier bars l2 are each provided with one or more pellet receiving pockets 25, disposed transversely along their length. Accordingly, as the carrier bars l2 are drawn beneath the feed hopper 5, the pockets 25 of the carrier bars l2 operate to receive and entrain pellets from the feed hopper 5, drawing the pellets along the conveyor mechanism 4 for further processing. To be noted is that although the carriers bars l2 illustrated in Figures 2-4 illustrate only two such pockets 25 for each carrier bar l2, for purposes of simplicity, the carrier bars l2 may be provided with any number of pockets 25 disposed along their length, as desired, enabling significant numbers of pellets to be processed in parallel.

Provided that a sufficient quantity of pellets is contained within the cavity 20 of the feed hopper 5, the pockets 25 of the carrier bars l2 will become filled with pellets as the conveyor mechanism 4 is drawn beneath the feed hopper 5, in the general direction of the arrow 26. Before proceeding from beneath the feed hopper 5, the carrier bars l2 and the pellets 25 which they contain will encounter a brush 27 which rotates in a direction opposite to the direction of transport of the pellets 25, as shown by the arrow 28. The brush 27 primarily operates to return pellets to the cavity 20 of the feed hopper 5 which have not been received within one of the pockets 25 of the carrier bars l2. However, the brush 27 also operates to effectively seat the pellets which have been received within the pockets 25 of the carrier bars l2, within their respective pockets. In this fashion, pellets are reliably transferred from the feed hopper 5 to the conveyor mechanism 4, for further processing. To be noted is that should it become desirable to remove pellets from the feed hopper 5, for cleaning or servicing of the unit, a trap door 29 is provided at the rear of the feed hopper 5 which is operable by lifting the knob 30 to relieve the feed hopper 5 of its contents.

The foregoing procedures will result in the entrainment of rows of pellets within the pockets 25 of the carrier bars l2 as the carrier bars l2 are conveyed along their desired path by the conveyor mechanism 4. For uniformity of result, it is important for the pellets to be received within the pockets 25 of the carrier bars l2 so that the pellets do not unnecessarily extend from the pockets 25 (i.e., sitting in the pockets on their ends). While the rotating brush 27 operates to achieve such a result, additional measures may be provided, if desired, to further assure that the pellets are properly seated within the pockets 25 of the carrier bars l2. One such measure is to provide an additional rotating brush, similar to the brush 27, along the inclined portion l3 of the chain conveyor l0. However, since this could potentially cause pellets to be thrown from the pockets 25, it is preferred to ensure seating of the pellets by locating a vibrator 3l beneath the inclined portion l3 of the chain conveyor l0 so that the carrier bars l2 are caused to encounter a vibrating surface 32 as the carrier bars l2 are drawn along the inclined portion l3 of the chain conveyor l0. This has the added advantage of freeing the inclined portion l3 of potentially interfering structures, for purposes which will become apparent from the description which follows.

Upon transferring the pellets from the feed hopper 5 to the pockets 25 of the carrier bars l2, it then remains to apply appropriate indicia to the pellets prior to their discharge from the marking apparatus l, at l6. The configuration of the conveyor mechanism 4 which is selected for illustration in Figures 2-4 provides three different areas for accomplishing this result. The construction illustrated shows placement of the printing head 6 along the horizontal portion l4 of the chain conveyor l0. This placement has been selected for ease of description and illustration, but it will be seen from the description which follows that this arrangement is not according to the invention, which requires placement of the printing head 6 along the inclined portion l3 of the chain conveyor l0, or the declining portion l5 of the chain conveyor l0, as desired. It is possible for multiple printing heads 6 to be placed along different portions of the chain conveyor l0 to allow multiple indicia (e.g., different markings, different colors, etc.) to be applied to the pellets as the pellets are conveyed through the marking apparatus l. Further discussion of the printing head 6 will be provided below, based upon its placement along the horizontal portion l4 of the conveyor mechanism 4. Special considerations which might apply to placement of the printing head 6 at other locations along the chain conveyor l0 will be discussed where appropriate.

In any event, after receiving indicia from the printing head 6, the chain conveyor l0 will cause the pellets carried by the carrier bars l2 to progress to the declining portion l5 of the chain conveyor l0, for eventual discharge at l6. To make sure that the pellets do not fall from the carrier bars l2 in the course of traversing the declining portion l5 of the chain conveyor l0, a guide 35 is provided which adjustably overlies the declining portion l5 of the chain conveyor l0 so that the pellets are securely retained within the pockets 25 of the carrier bars l2, without damaging or otherwise marring the pellets in the course of this transfer.

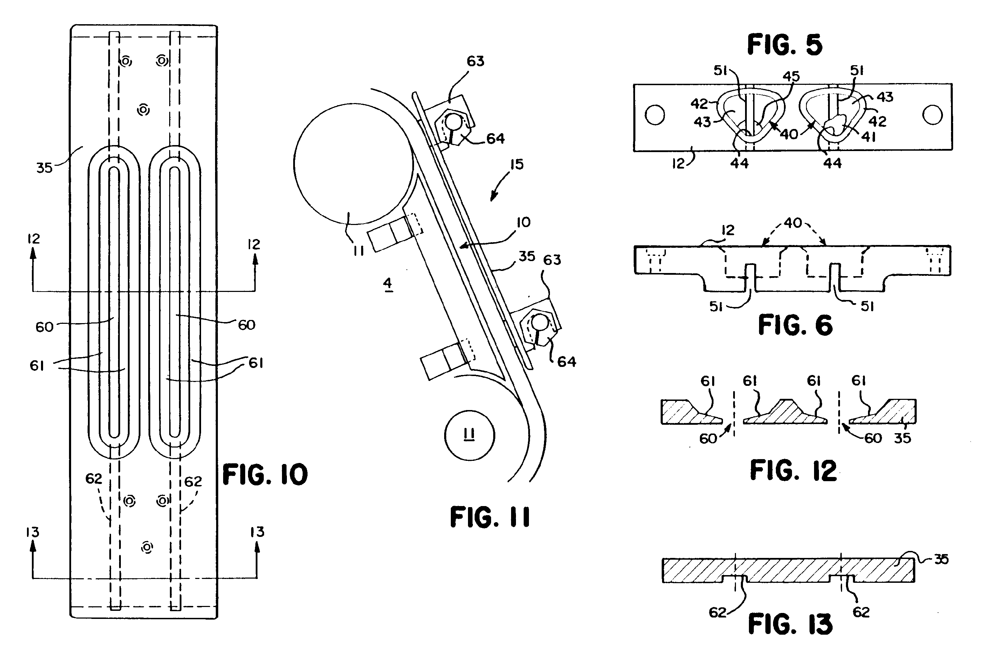

To be noted is that in Figures 2-4, the pockets 25 of the carrier bars l2 are simply circular (hemispherical) in configuration. Often, this will be adequate to effectively receive and position pellets for processing as previously described. However, it has been found that appropriate modification of the configuration of the pockets of the carrier bars l2 can be effective in providing still further assurances that the pellets proceed through the pellet marking apparatus l in desired fashion. To this end, and with reference to Figures 5-8, the carrier bars l2 are preferably provided with configured pockets which are especially adapted to receive and seat the pellets which are received from the feed hopper 5, especially irregularly shaped pellets such as the pellet 4l shown in Figure 5.

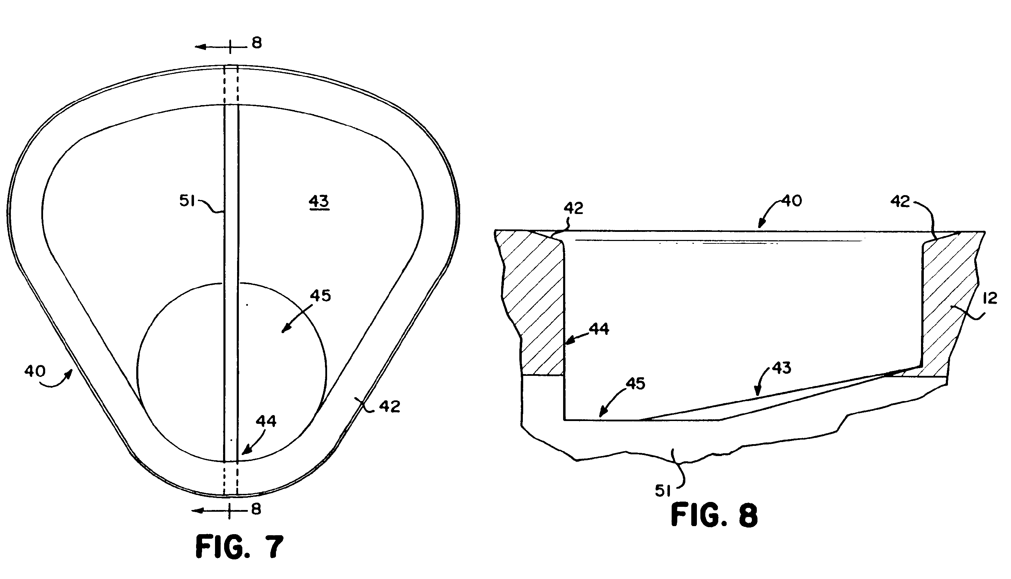

Referring particularly to Figures 7 and 8, it is seen that the pellet receiving pockets 40 include tapered marginal portions 42 and a configured base 43. The tapered marginal portions 42 operate to facilitate transfer of the pellets from the feed hopper 5 to the pockets 40, as well as to avoid sharp edges which could potentially mar the pellets as they enter the pockets 40. The configured base 43 combines with the generally sector-shaped pocket 40 to urge a pellet toward the foot 44 of the pocket 40 so that the pellet comes to rest upon the generally circular bed 45 of the base 43. Such structure gives rise to a "funneling" effect which tends to direct pellets received within the pockets 40 toward the foot 44 and upon the bed 45. The base 43 defines a reducing depth of the pocket, in the direction of movement of the conveyor, and away from the floor, or bed 45 of the pocket.

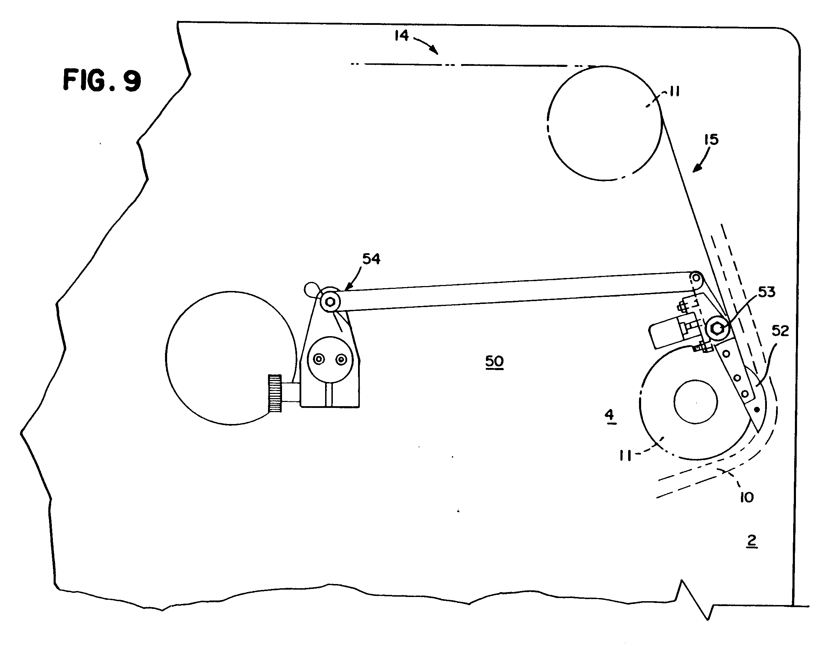

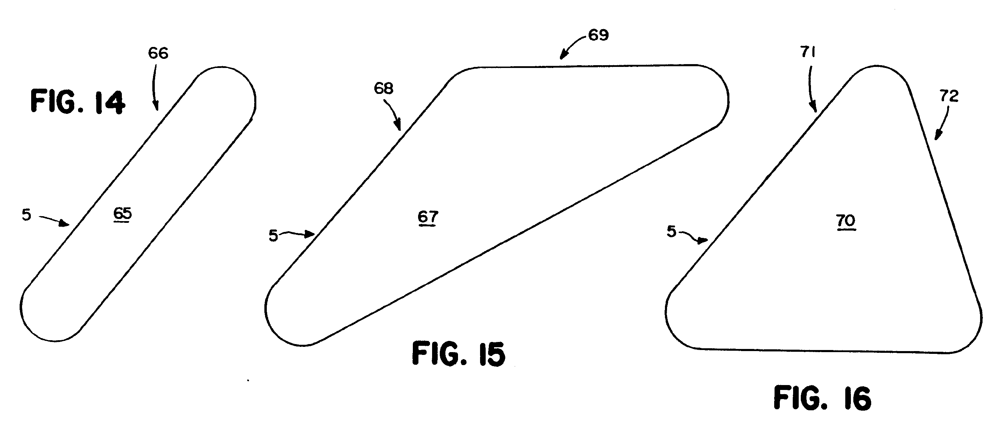

This configuration has the beneficial effect of facilitating discharge of the pellets from the pockets 40, at l6, under the influence of gravity. However, under certain extreme conditions such as increased temperature, the use of relatively sticky pellet coatings, or even overspray resulting from the ink used in the marking process, it is conceivable that pellets will at times become caught within the pockets 40 (or the pockets 25), preventing their reliable discharge at l6. An air jet may be provided, if desired, to assist in removal of the pellets from the pockets 25, 40 of the carrier bars l2, and to assist in drying of the ink applied to the pellets. However, to provide positive assurances that the pellets are effectively discharged from their respective pockets 25, 40, the marking apparatus l is preferably provided with a knock-out mechanism 50, as shown in Figure 9, which operates in combination with a series of slots 5l provided in the carrier bars l2, as shown in Figures 5 and 6.

The slots 5l are configured to permit a pair of knock-out bars 52 to extend into the pellet receiving pockets 40 of the carrier bars l2, to forcibly eject the pellets from the pockets 40. Although stationary knock-out bars may be used for this purpose, to further prevent potential damage or marring of the pellets being processed it is preferred that the knock-out bars 52 reciprocate so as to only briefly and lightly impact the pellets at the discharge l6. To this end, the knock-out bars 52 are pivotally mounted, at 53, to operate responsive to a bell-crank mechanism 54 which is appropriately timed to operation of the marking apparatus l to effectively discharge the pellets from the pockets of the carrier bars l2 as the carrier bars l2 pass the discharge l6.

The foregoing operates to convey parallel rows of pellets along the conveyor mechanism 4 and beneath the printing head 6. In accordance with the present invention, the printing head 6 operates to apply indicia to the pellets making use of a printing mechanism which does not contact the pellets, but rather which is spaced from the pellets as the series of pellets progress beneath the printing head 6.

To this end, the printing head 6 incorporates a pair of ink-jet printing heads 55 which are positioned in general alignment with the rows of pockets 25, 40 of the carrier bars l2 so that suitable indicia may be applied to the pellets seated within the pockets 25, 40 as the carrier bars l2 pass beneath the pair of printing heads 55. Although any of a variety of ink-jet printing heads 55 may be selected for this purpose, a printing head which has been found to be particularly useful for this purpose is the "PT 80 Ink-jet Print Head" which is marketed by the Siemens Corporation. This printing head, in combination with an appropriate controller, has been found to provide effective results in accordance with the present invention, while enabling any of a variety of indicia to be applied to the pellets being processed in a simple and straightforward manner. Moreover, since ink-jet printing heads of this type are operated responsive to a microprocessor based controller, the pattern being applied by the printing heads is readily varied without having to change design rolls or the like, as is necessary in connection with conventional contact-type printing methods. In using ink-jet printing heads of this type, it has been found that effective results can be achieved by spacing the outlet of each printing head 55 from the surface of the pellets to be imprinted by a distance on the order of 2 to l0 mm, with 3 to 5 mm being the preferred spacing for this purpose.

Any of a variety of methods may be used to properly coordinate operation of the ink-jet printing heads 55 (in accordance with signals received from their respective controllers), to assure that the indicia are appropriately applied to the pellets as they pass beneath the printing head 6. For example, one of the sprockets ll receiving the chain conveyor l0 may be provided with a slotted or apertured timing wheel which, in conjunction with an electro-optical device, may be used to detect (time) the positioning of the carrier bars l2, and the pellets which they contain. Alternatively, an electro-optical device may be positioned ahead of the printing head 6, just over the pockets 25, 40 of the carrier bars l2, to sense the anticipated arrival of pellets beneath the printing head 6. This latter configuration has the added advantage of providing a means for determining whether or not the pockets 25, 40 actually contain a pellet, so that the corresponding ink-jet printing head 55 may be enabled or disabled depending upon the status of the approaching pocket 25, 40.

In either event, proper synchronization between the timing device and the operation of the printing heads 55 operates to effectively and reliably transfer markings to the pellets as they are conveyed beneath the printing head 6. This result is further enhanced when using the configured pockets 40 of Figures 7 and 8 since the funneling effect developed by the configured pockets 40 operates to further assure that the pellets are positioned at a known location within the pellet receiving pockets 40, i.e., the foot 44 of the pocket 40, resting upon the bed 45.

As previously indicated, a pair of ink-jet printing heads 55 are mounted in the printing head 6 to correspondingly address each of the rows of pockets 25, 40 which are developed in the carrier bars l2 of the chain conveyor l0. These printing heads 55 may be used to apply similar, or even different indicia to the pellets being processed, as desired. However, due to the close proximity of the pockets 25, 40 of the carrier bars l2, and the relatively large size of the printing heads 55, the printing heads 55 are preferably contained within the printing head 6 in a staggered arrangement to permit appropriate alignment between the printing heads 55 and the pockets 25, 40. Differences in positioning resulting from this staggered relationship are easily accommodated by appropriately compensating the timing scheme previously described, to account for these differences using the controller which operates the printing heads 55.

Referring again to Figures 2-4, each of the printing heads 55 are advantageously supplied with ink from a common reservoir 56 associated with the printing head 6. As previously indicated, printing quality and effectiveness will depend upon the distance established between the printing heads 55 and the pellets which are to be marked. Adjustment of this distance, as well as the lateral positioning of the printing heads 55, is enabled by the adjustment knobs 57 which are provided on the front of the printing head 6. A drain 58 may be provided for servicing purposes, if desired.

As previously indicated, placement of the printing head 6 along the horizontal portion l4 of the chain conveyor l0, as previously described, is not according to the invention. The printing head 6 could be placed along the inclined portion l3 of the chain conveyor l0, operating in similar fashion. This is permitted because, apart from placement of the ink reservoir, operation of the printing heads 55 is essentially independent of their orientation. It is also possible to place the printing head 6 along the declining portion l5 of the chain conveyor l0. However, in such case, special steps must be taken to assure that the desired indicia are applied as previously described despite the significant decline encountered by the pellets as they traverse the declining portion l5.

To this end, reference is made to Figures l0-l3, which illustrate the guide 35 in further detail. To enable the ink-jet printing heads 55 of the printing head 6 to access the pellets as they traverse the declining portion l5 of the chain conveyor l0, the guide 35 is provided with a pair of longitudinally extending slots 60. Each of the slots 60 is tapered at 6l (Figure l2), to effectively receive the ink-jet printing heads 55 so as to achieve their desired spacing from the pellets which proceed beneath the guide 35. The guide 35 is additionally provided with grooves 62 which progress fully along the length of the guide 35 to provide a channel for receiving the indicia which are applied to the pellets as the pellets progress along the declining portion l5 of the chain conveyor l0, to make sure that the ink has sufficient time to dry before encountering a solid surface. This also has the added effect of minimizing marring as the pellets progress along the guide 35.

As is best illustrated in Figure ll, the guide 35 is fully adjustable to make sure that adequate clearance is provided between the guide 35 and the carrier bars l2 of the chain conveyor l0, to prevent binding and to avoid marring of the pellets being conveyed. Indeed, such adjustment may be used to effectively expose desired surfaces of the pellets to be marked, through the slot 60 of the guide 35, providing an accurate means for regulating the distance between the surface of the pellets and the operative surface of the ink-jet printing heads 55, despite the significant incline encountered by the pellets. Such adjustment is preferably accomplished by providing the guide 35 with mounttings 63 which are adapted to removably engage a pair of eccentrics 64 associated with the frame 2 of the marking apparatus l, although any of a variety of adjustment devices may be used for this purpose, if desired.

It will therefore be seen that the foregoing structure operates to effectively apply indicia to pellet-shaped articles, including both regularly and irregularly shaped articles, without necessitating contact between the printing apparatus and the articles to be imprinted.

For example, the configuration of the conveyor mechanism 4 may be freely varied. The embodiment illustrated in Figures I-I3 of the drawings allows placement of the printing head 6 along any of three different portions of the chain conveyor I0, either individually or in plural combinations. However, other conveyor mechanisms may be used, if desired, depending upon the desired placement for the printing head 6. For example, a significantly simplified conveyor mechanism 65 is shown in Figure I4, which is effectively used in receiving a printing head 6 along its inclined portion 66, downstream from the region which would receive the feed hopper 5. Figure I5 illustrates a conveyor mechanism 67 which allows the printing head 6 to be positioned either along an inclined portion 68 preceding a horizontal portion 69. Figure I6 illustrates a conveyor mechanism 70 which allows the printing head to be positioned either along its inclined portion 7I or its declining portion 72. Other configurations are also possible.

## Claims

1. An apparatus for applying indicia to pellet-shaped articles, comprising a feed hopper (5) for receiving a plurality of articles, applying means (6) for applying indicia to the articles without coming into contact with surfaces of the articles, conveying means (4) operatively associated with the feed hopper (5) and having a plurality of pockets (25,40) for receiving said articles for conveying the received articles through the apparatus, the conveyor means (4) having a portion (13,15) which slopes relative to the horizontal, and which is operatively associated with the applying means (52) whereby the pockets of said portion (13,15) present the articles to the applying means (6) for application of the indicia, and a guide (35) overlying said portion (13,15) of the conveyor means which slopes relative to the horizontal for retaining the articles in the pockets (25,40), the guide (35) being located between the applying means (6) and said portion (13,15) and having a slot (60) aligned with the applying means (6) for permitting communication between the applying means and articles in said pockets (25,40), the guide (35) being arranged to position the articles at a given spacing from the applying means.

2. An apparatus according to Claim 1, wherein said feed hopper (5) is associated with an upwardly inclined portion (13) of said conveyor means (4), in advance of said indicia-applying means (6).

3. An apparatus according to Claim 1 or 2, wherein said guide (35) includes a groove (62) extending in the direction of movement of said articles, and configured to receive indicia-applied surfaces of said articles therein.

4. An apparatus according any one of the preceding claims wherein said indicia-applying means (6) is operated responsive to timing signals produced by said conveyor means (4).

5. An apparatus according to any one of the preceding claims wherein said indicia-applying means (6) is operated responsive to timing signals produced in accordance with the presence of an article in the vicinity of said indicia-applying means.

6. An apparatus according to any one of the preceding claims wherein said indicia applying means (6) comprises an ink-jet printing device (55).

7. An apparatus according to any preceding claim, wherein said portion (15) of the conveyor means (4) is a declining portion.

8. An apparatus according to Claim 7, wherein each pocket (25,40) has a base (43) defining a reducing depth to the pocket in the direction of movement of the conveying means (4).

9. An apparatus according to Claim 8, wherein each pocket (25,40) is sector-shaped in plan view and, the base (43) reduces in depth away from a floor (45) of the pocket.

10. An apparatus according to Claim 8 or 9, wherein marginal portions (42) of said pockets (25,40) taper outwardly.

11. An apparatus according to any one of the preceding claims wherein said conveyor means (4) comprises carrier bars provided with said pockets (25,40) and having slots (51) for communicating with bottom portions of said pockets, and the said apparatus includes means (52) for ejecting articles from said pockets.

12. An apparatus according to any preceding claim, wherein the conveying means (4) comprises a continuous chain arrangement.

## Patentansprüche

1. Gerät zur Aufbringung von Markierungen auf pelletförmige Gegenstände, mit einem Zuführtrichter (5) zur Aufnahme einer Vielzahl von Gegenständen, einer Aufbringanordnung (6) zum Aufbringen von Markierungen auf die Gegenstände ohne mit deren Oberflächen in Kontakt zu gelangen, einer Transportanordnung (4), die mit dem Zuführtrichter zusammenwirkt und eine Vielzahl von Taschen (25, 40) aufweist zur Aufnahme der Gegenstände und zum Transport der aufgenommenen Gegenstände durch das Gerät, wobei die Transportanordnung (4) einen Abschnitt (13, 15) aufweist, der zur Horizontalen geneigt ist und der der Aufbringanordnung (52) zusammenwirkend zugeordnet ist, wobei die Taschen des Abschnittes (13, 15) die Gegenstände der Aufbringanordnung (6) zum Aufbringen der Markierung darbieten,sowie mit einer Führung (25), die den Abschnitt (13, 15) der geneigt zur Horizontalen angeordneten Transportanordnung zur Aufnahme der Gegenstände in den Taschen (25, 40) bedeckt, wobei die Führung (35) zwischen der Aufbringanordnung (6) und dem Abschnitt (13, 15) angeordnet ist und einen Schlitz (60) aufweist, der zur Aufbringanordnung (6) ausgerichtet ist und eine Verbindung ermöglicht zwischen der Aufbringanordnung und den Gegenständen in den Taschen (25, 40) und wobei die Führung (35) dergestalt angeordnet ist, daß sie die Gegenstände in einem gegebenen Abstand zur Aufbringanordnung positioniert.

2. Gerät nach Anspruch 1, bei dem der Zuführtrichter (5) einem nach oben gerichteten Abschnitt (13) der Transportanordnung (4) vor der Aufbringanordnung (6) zugeordnet ist.

3. Gerät nach Anspruch 1 oder 2, bei dem die Führung (35) eine Nut (62) aufweist, die sich in Bewegungsrichtung der Gegenstände erstreckt und derart gestaltet ist, daß sie die mit Markierungen versehenen Oberflächen der Gegenstände aufnimmt.

4. Gerät nach einem der vorhergehenden Ansprüche, bei dem die Markierungs-Aufbringanordnung (6) durch Zeitsignale steuerbar ist, die durch die Transportanordnung (4) erzeugt werden.

5. Gerät nach einem der vorhergehenden Ansprüche, bei dem die Markierungs- Aufbringanordnung (6) steuerbar ist in Abhängigkeit von Zeitsignalen, die erzeugt werden als Funktion der Anwesenheit von Gegenständen in der Nähe der Markierungs-Aufbringanordnung.

6. Gerät nach einem der vorhergehenden Ansprüche, bei dem die Markierungs-Aufbringanordnung (6) eine Tintenstrahl-Druckvorrichtung (55) aufweist.

7. Gerät nach einem der vorhergehenden Ansprüche, bei dem der Abschnitt (15) der Transportanordnung (4) ein abfallender Abschnitt ist.

8. Gerät nach Anspruch 7, bei dem jede Tasche (25, 40) ein Grundteil (43) aufweist, mit einer verringerten Taschentiefe in Bewegungsrichtung der Transportanordnung (4).

9. Gerät nach Anspruch 8, bei dem jede Tasche (25, 40) in Draufsicht sektorförmig gestaltet ist und das Grundteil (43) die Tiefe vom Boden (45) der Tasche aus verringert.

10. Gerät nach Anspruch 8 oder 9, bei dem die Randbereiche (42) der Taschen (25, 40) sich nach außen zu verjüngen.

11. Gerät nach einem der vorhergehenden Ansprüche, bei dem die Transportanordnung (4) Transportstäbe aufweist, die mit den Taschen (25, 40) bestückt sind und Schlitze (51) aufweisen, zur Verbindung mit den Bodenabschnitten der Taschen, wobei das Gerät eine Anordnung (52) zum Ausstoßen der Gegenstände aus den Taschen aufweist.

12. Gerät nach einem der vorhergehenden Ansprüche, bei dem die Transportanordnung (4) eine Endlos-Ketten-Anordnung aufweist.

**Revendications**

I.- Appareil pour appliquer des marques sur des objets en forme de comprimés, comprenant une trémie d'alimentation (5) pour recevoir une multiplicité d'objets, des moyens d'application (6) pour appliquer des marques sur les objets sans venir en contact avec des surfaces de ces objets, des moyens de transport (4) fonctionnellement associés à la trémie d'alimentation (5) et ayant une multiplicité d'alvéoles (25,40) pour recevoir les objets et transporter les objets reçus à travers l'appareil, ces moyens de transport (4) ayant une portion (l3,l5) qui est inclinée sur l'horizontale et qui est fonctionnellement associée aux moyens d'application (6), d'où il résulte que les alvéoles de cette portion (l3,l5) présentent les objets aux moyens d'application (6) pour l'application des marques, et un guide (35) recouvrant cette portion (l3,l5) des moyens de transport qui est inclinée sur l'horizontale afin de retenir les objets dans les alvéoles (25,40), le guide (35) étant situé entre les moyens d'application (6) et la portion (l3,l5)et ayant une fente (60) alignée avec les moyens d'application (6)pour permettre une communication entre les moyens d'application et les objets dans les alvéoles (25,40), le guide (35) étant agencé pour positionner les objets à une distance donnée des moyens d'application.

2.- Appareil selon la revendication I, dans lequel la trémie d'alimentation (5) est associée à une portion inclinée vers le haut (I3) des moyens de transport (4), en amont des moyens d'application de marques (6).

3. - Appareil selon la revendication I ou la revendication 2, dans lequel le guide (35) comprend une rainure (62) qui s'étend dans la direction du déplacement des objets, cette rainure étant configurée pour recevoir les surfaces des objets sur lesquelles sont appliquées les marques.

4.- Appareil selon l'une des revendications précédentes, dans lequel les moyens d'application de marques (6) sont activés en réponse à des signaux de synchronisation produits par les moyens de transport (4).

5.- Appareil selon l'une des revendications précédentes, dans lequel les moyens d'application de marques (6) sont activés en réponse à des signaux de synchronisation produits par la présence d'un objet dans le voisinage de ces moyens d'application de marques.

6.- Appareil selon l'une des revendications précédentes, dans lequel les moyens d'application de marques (6) comprennent un dispositif d'impression par jets d'encre (55).

7.- Appareil selon l'une des revendications précédentes, dans lequel la portion (I5) des moyens de transport (4) est une portion inclinée vers le bas.

8.- Appareil selon la revendication 7, dans lequel la base (43)de chaque alvéole (25,40) est orientée de telle sorte que la profondeur de l'alvéole diminue dans la direction du déplacement des moyens de transport (4).

9.- Appareil selon la revendication 8, dans lequel chaque alvéole (25,40) a, en plan, la forme d'un secteur et la base (43) réduit la profondeur de l'alvéole lorsqu'on s'éloigne d'un fond (45) de l'alvéole.

I0.- Appareil selon la revendication 8 ou la revendication 9, dans lequel des portions marginales (42) des alvéoles (25,40) s'évasent vers l'extérieur.

II.- Appareil selon l'une des revendications précédentes, dans lequel les moyens de transport (4) comprennent des barres porteuses équipées de ces alvéoles (25,40) et ayant des fentes (5I) pour communiquer avec les portions de fond de ces alvéoles, et qui comporte des moyens (52) pour éjecter les objets hors des alvéoles.

I2.- Appareil selon l'une des revendications précédentes, dans lequel les moyens de transport (4) comportent un agencement de chaînes continues.

FIG. I

FIG. 2

**FIG. 3**

EP 0 302 920 B1

**FIG. 4**

FIG. 5

FIG. 6

FIG. 12

FIG. 13

FIG. 11

FIG. 10

FIG. 7

FIG. 8

EP 0 302 920 B1

FIG. 9

FIG. 14

FIG. 15

FIG. 16

65

66

5

67

68

69

5

70

71

72

5

17

EP 0 302 920 B1